Europäisches Patentamt

European Patent Office

Office européen des brevets

(19)

(11) Veröffentlichungsnummer : **0 495 796 B1**

(12) **EUROPÄISCHE PATENTSCHRIFT**

(45) Veröffentlichungstag der Patentschrift :
01.06.94 Patentblatt 94/22

(21) Anmeldenummer : 90913428.0

(22) Anmeldetag : 13.09.90

(86) Internationale Anmeldenummer :
PCT/EP90/01559

(87) Internationale Veröffentlichungsnummer :
WO 91/04892 18.04.91 Gazette 91/09

(51) Int. Cl.⁵ : **B60T 8/00, B60K 28/16**

(54) ANTIBLOCKIERREGELVERFAHREN UND ANTRIEBSSCHLUPFREGELVERFAHREN.

(30) Priorität : 09.10.89 DE 3933652

(43) Veröffentlichungstag der Anmeldung :
29.07.92 Patentblatt 92/31

(45) Bekanntmachung des Hinweises auf die
Patenterteilung :
01.06.94 Patentblatt 94/22

(84) Benannte Vertragsstaaten :
AT DE FR GB SE

(56) Entgegenhaltungen :
EP-A- 0 246 790
EP-A- 0 274 397
WO-A- 88/09276
DE-A- 3 610 184
DE-A- 3 644 139

(73) Patentinhaber : **ROBERT BOSCH GMBH**
**Postfach 30 02 20**
**D-70442 Stuttgart (DE)**

(72) Erfinder : **SIGL, Alfred**
**Waldeck 8**
**D-7126 Sersheim (DE)**

(74) Vertreter : **Kammer, Arno, Dipl.-Ing.**
**ROBERT BOSCH GmbH**
**Zentralabteilung Patente**
**Postfach 30 02 20**
**D-70442 Stuttgart (DE)**

Jouve, 18, rue Saint-Denis, 75001 PARIS

## Beschreibung

### Stand der Technik

Aus der DE-OS 37 07 235 ist ein Antiblockierregelsystem bekannt, bei dem aus den Radgeschwindigkeitssignalen ein Referenzgeschwindigkeitsverlauf ermittelt wird, dessen Steigung ein Maß der Fahrzeugverzögerung ist. Das Antiblockierregelsystem ist in ein wenigstens zeitweise allradgetriebenes Fahrzeug eingebaut. In den Instabilitätsphasen auf niedrigen Reibwerten stüzt das Signal eines Fahrzeugverzögerungsgebers die Steigung der Referenzgeschwindigkeit.

Aus der DE-A1-3644139 ist es bekannt die Signale eines Fahrzeuggeschwindigkeitsgebers mit außerhalb einer Regelung aus den Radgeschwindigkeiten ermittelten Fahrzeugbeschleunigungssignalen zu vergleichen, um so diesen Geber zu überwachen.

### Vorteile der Erfindung

Auf ebenen Fahrbahnen stimmt die aus den Radgeschwindigkeiten berechnete Fahrzeugverzögerung während einer ABS-Bremsung mit den Werten eines Beschleunigungssensors überein. Kurzzeitige Störungen auf dem Beschleunigungssignal, wie z.B. die Fahrzeugnickbewegung können durch entsprechende Filterauslegung beseitigt werden. Unterscheiden sich die gemessene und die berechnete Fahrzeugverzögerung, so findet die Bremsung an einer Steigung oder einem Gefälle statt. Die bei ABS verwendeten Beschleunigungssensoren basieren auf dem Feder/Masse-Prinzip und messen daher die Resultierende aus Fahrzeugbeschleunigung und Fahrzeuglage zur Erdbeschleunigung. Steht das Fahrzeug an einem Berg mit z.B. 20 % Steigung, zeigt der Beschleunigungssensor einen Wert $A_1 = 0,19$ g an, wobei $A_1 = g \cdot \sin \arctan P/100$ mit P = Steigung in % ist.

Speziell bei starkem Gefälle ist es sinnvoll, im Gegensatz zu der normalen ABS-Abstimmung, der Abbremsung vor der Fahrstabilität Priorität zu geben. Dies trifft umso mehr zu, je niedriger die berechnete Fahrzeugverzögerung ist. Durch eine Auswertung der Differenz der berechneten zur gemessenen Verzögerung kann ein Fahrbahngefälle erkannt und es können ABS-Regelstrategien angepaßt werden.

Wenn $A_1$ der Betrag der gemessenen Verzögerung und $A_2$ die aus den Radgeschwindigkeiten berechnete Verzögerung ist, so wird gebildet:

$$\Delta A = |A_1| - A_2$$

Gefälle wird erkannt, wenn $A_1$ ohne Bremsenbetätigung oder $\Delta A$ bei Bremsbetätigung größer einem Schwellwert wird. Es wird dann die Umschaltung der Reglervorgaben in Richtung unempfindlich zur Verbesserung der Abbremsung vorgenommen. Es können z.B. Schlupfschwellen oder Verzögerungsschwellen hoch gesetzt werden, jedoch auch Schwellen für Mischwerte. Man kann aber auch $\Delta A$ analog in die Berechnung von Instabilitäts- bzw. Schlupfberechnungsformeln einbeziehen, wobei mit größerem $\Delta A$ mehr Schlupf zugelassen wird.

Die erfindungsgemäße Lehre ist auch auf ASR anwendbar. Durch eine Umschaltung der ABS/ASR-Regelstrategie bei großem Fahrbahngefälle/-steigung kann speziell bei weichem Untergrund die Abbremsung bzw. Traktion verbessert werden. Dies ist vor allem für Geländefahrzeuge wichtig. Bisher wird für diese Fahrzeuge ein vom Fahrer zu bedienender Schalter vorgesehen. Mittels des A-Sensors erfolgt die Umschaltung automatisch. Für obige Fahrzeuge ist aufgrund eines Allradkonzeptes meist sowieso ein A-Sensor notwendig.

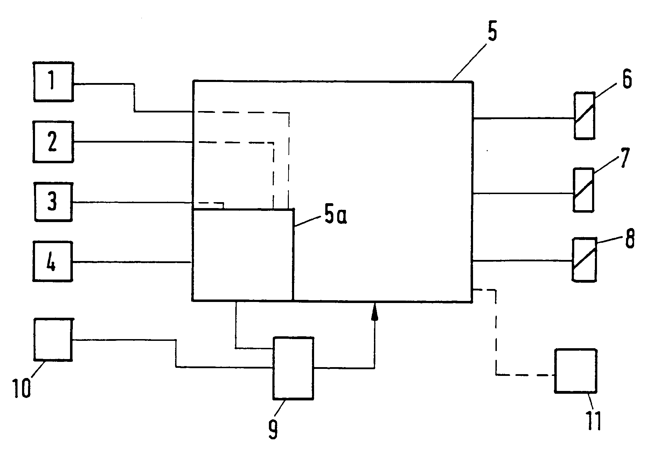

Anhand des in der Zeichnung dargestellten Ausführungsbeispiels wird die Erfindung näher erläutert.

In der Zeichnung sind vier Radgeschwindigkeitsmeßwertgeber mit 1 bis 4 bezeichnet. Ihre Signale werden einer ABS-Auswerteschaltung 5 zugeführt, die bei Blockierneigung den Druck an den Radbremsen mittels Bremsdrucksteuerventilen 6-8 variiert.

In einem Teil 5a der Auswerteschaltung wird die Referenzgeschwindigkeit $V_{Ref}$ gebildet, die zur Schlupfberechnung benötigt wird. Die Steigung der Referenzgeschwindigkeitsverlauf ist ein Maß für die Fahrzeugverzögerung.

Der Teil 5a gibt ein entsprechendes Signal an einen Vergleicher 9, dem auch das Signal eines Fahrzeugverzögerungsmessers 10 zugeführt wird. Gemäß einer ersten Ausführungsform gibt der Vergleicher 9 ein Signal ab, wenn $\Delta A = |A_1| - A_2$ eine bestimmte Schwelle übersteigt. Dieses Signal schaltet dann z.B. die Schlupf- und Verzögerungsschwellen in der Auswerteschaltung 5 auf höhere Werte. Es ist jedoch auch möglich, daß der Vergleicher ein dem Wert $\Delta A$ entsprechendes analoges Signal an die Auswerteschaltung gibt; dieses Signal geht dann z.B. in die Schlupf- und Beschleunigungsermittlung ein und verkleinert mit zunehmender Größe diese Signale. Auch dadurch wird der Regler unempfindlicher gemacht.

Im ASR-Fall wird die Referenzgeschwindigkeit z.B. durch Mittelung der Geschwindigkeiten der nicht angetriebenen Räder gewonnen. Hier wird dann die in 10 gemessene Fahrzeugbeschleunigung mit der Steigung der in 5a ermittelten Referenzgeschwindigkeit verglichen und ebenfalls die Regelung im Falle eines über der Schwelle liegenden $\Delta A$ unempfindlicher gemacht. Hier kann noch ein Stellglied 11 für die Änderung des Motormomentes in die Regelung einbezogen werden.

Ein weiteres Indiz für eine Fahrt im Gelände sind die durch Fahrbahnunebenheiten ausgelösten großen Radgeschwindigkeitsänderungen. Die Erkennung einer sogenanten Schlechtwegstrecke ist Stand der Technik. Bei dem Vorhandensein einer Schlechtwegstrecke wird der Einfluß von $\Delta A$ auf den Regler verstärkt.

**Patentansprüche**

1. Antiblockierregelverfahren, bei dem Meßwertgeber zur Ermittlung der Radgeschwindigkeiten, eine Auswerteschaltung zur Verarbeitung dieser Radgeschwindigkeitssignale und Bremsdrucksteuereinheiten zur Variation des Bremsdrucks abhängig vom Radbewegungsverhalten verwendet werden, wobei in der Auswerteschaltung aus den Radgeschwindigkeiten die Fahrzeugverzögerung $A_2$ ermittelt wird, und wobei das Signal $A_1$ eines Fahrzeugsverzögerungsgebers mit dem ermittelten Signal $A_2$ verglichen wird, dadurch gekennzeichnet, daß bei Überwiegen der gemessenen Fahrzeugverzögerung $A_1$ im Bremsfall die ABS-Regelung in Richtung einer unempfindlichen Regelung verändert wird

2. Antiblockierregelverfahren nach Anspruch 1, dadurch gekennzeichnet, daß die ABS-Regelung auf unempfindlicher umgeschaltet wird, wenn die gemessene Fahrzeugverzögerung $A_1$ die aus den Radgeschwindigkeiten ermittelte Fahrzeugverzögerung $A_2$ ($\Delta A = /A_1/-A_2$) wenigstens um einen vorgegebenen Betrag übersteigt.

3. Antiblockierregelverfahren nach Anspruch 1, dadurch gekennzeichnet, daß die Differenz $\Delta A$ der beiden Fahrzeugverzögerungen analog gebildet wird und daß dieser Differenzwert bei der Bildung des Instabilitätskriteriums berücksichtigt wird.

4. Antiblockierregelverfahren nach einem der Ansprüche 1 - 3, dadurch gekennzeichnet, daß bei der Erkennung einer Schlechtwegstrecke der Einfluß von $\Delta A$ auf die Reglerempfindlichkeit verstärkt wird.

5. Antriebsschlupfregelverfahren, bei dem Meßwertgeber zur Ermittlung der Radgeschwindigkeiten, eine Auswerteschaltung zur Verarbeitung dieser Radgeschwindigkeitssignale und Steuereinheiten zur Einsteuerung von Bremsdruck oder zur Herabsetzung des Motormoments bei Durchdrehneigung verwendet werden, wobei in der Auswerteschaltung aus den Radgeschwindigkeiten die Fahrzeugbeschleunigung $A_4$ ermittelt wird und wobei das Signal $A_3$ eines Fahrzeugbeschleunigungsgebers mit dem ermittelten Signal $A_4$ verglichen wird, dadurch gekennzeichnet, daß bei Uberwiegen der gemessenen Fahrzeugbeschleunigung $A_3$ die ASR in Richtung einer unempfindlichen Regelung verändert wird.

6. Antriebsschlupfregelverfahren nach Anspruch 5, dadurch gekennzeichnet, daß die ASR auf unempfindlicher umgeschaltet wird, wenn die gemessene Fahrzeugbeschleunigung $A_3$ die aus den Radgeschwindigkeiten ermittelte Fahrzeugbeschleunigung $A_4$ ($\Delta A = A_3 - A_4$) wenigstens um einen vorgegebenen Betrag $\Delta A$ übersteigt.

7. Antriebsschlupfregelverfahren nach Anspruch 5, dadurch gekennzeichnet, daß die Differenz $\Delta A$ der beiden Fahrzeugbeschleunigungen analog gebildet wird und daß dieser Differenzwert $\Delta A$ bei der Bildung der Schlupfschwellenvorgabe berücksichtigt wird.

8. Antriebsschlupfregelverfahren nach einem der Ansprüche 5 bis 7, dadurch gekennzeichnet, daß bei der Erkennung einer Schlechtwegstrecke der Einfluß von $\Delta A$ auf die Reglerempfindlichkeit verstärkt wird.

**Claims**

1. Control method for an antilock braking system, in which measured value transmitters for determining the wheel speeds, an evaluation circuit for processing these wheel speed signals and brake pressure control units for varying the brake pressure as a function of the movement behaviour of the wheels are used, the vehicle deceleration $A_2$ being determined from the wheel speeds in the evaluation circuit and the signal $A_1$ of a vehicle deceleration transmitter being compared with the signal $A_2$ which has been determined, characterized in that, when braking occurs, the ABS control is changed in the direction of insensitive control when the measured vehicle deceleration $A_1$ predominates.

2. Control method for an antilock braking system according to Claim 1, characterized in that the ABS control is switched over to less sensitive operation if the measured vehicle deceleration $A_1$ exceeds the vehicle deceleration $A_2$ ($\Delta A = /A_1/-A_2$), determined from the wheel speeds, by at least a predetermined amount.

3. Control method for an antilock braking system according to Claim 1, characterized in that the difference $\Delta A$ between the two vehicle decelerations is formed in an analogous fashion, and in that this differential value is taken into account when forming the instability criterion.

4. Control method for an antilock braking system according to one of Claims 1-3, characterized in that when a poor-quality section of the route is detected the influence of ∆A on the controller sensitivity is increased.

5. Control method for a drive slip control system, in which measured value transmitters for determining the wheel speeds, an evaluation circuit for processing these wheel speed signals and control units for applying brake pressure or for reducing the engine torque when there is a tendency to slip are used, the vehicle acceleration $A_4$ being determined from the wheel speeds in the evaluation circuit and the signal $A_3$ of a vehicle acceleration transmitter being compared with the signal $A_4$ which has been determined, characterized in that the drive slip control is changed in the direction of insensitive control when the measured vehicle acceleration $A_3$ predominates.

6. Control method for a drive slip control system according to Claim 5, characterized in that the drive slip control is switched over to less sensitive operation if the measured vehicle acceleration $A_3$ exceeds the vehicle acceleration $A_4$ ($\Delta A = A_3 - A_4$), determined from the wheel speeds, by at least a predetermined amount ∆A.

7. Control method for a drive slip control system according to Claim 5, characterized in that the difference ∆A between the two vehicle accelerations is formed in an analogous fashion, and in that this differential value ∆A is taken into account when forming the specified slip threshold value.

8. Control method for a drive slip control system according to one of Claims 5 to 7, characterized in that when a poor-quality section of the route is detected the influence of ∆A on the controller sensitivity is increased.

**Revendications**

1. Procédé de régulation antiblocage selon lequel on utilise un capteur de valeurs de mesure pour déterminer les vitesses des roues, un circuit d'exploitation pour traiter ces signaux de vitesse de roue et des unités de commande de pression de frein pour modifier la pression de frein en fonction du comportement mobile des roues, le circuit d'exploitation déterminant la décélération du véhicule $A_2$ à partir des vitesses des roues et le signal $A_1$ d'un capteur de décélération de véhicule étant comparé au signal $A_2$ ainsi obtenu, procédé caractérisé en ce qu'au cas où la décélération mesurée $A_1$ du véhicule est la plus importante, on modifie en cas de freinage la régulation ABS dans le sens d'une régulation moins sensible.

2. Procédé de régulation antiblocage selon la revendication 1, caractérisé en ce que la régulation ABS est commutée sur un fonctionnement moins sensible lorsque la décélération mesurée du véhicule $A_1$ dépasse d'au moins une valeur prédéterminée la décélération du véhicule $A_2$ ($\Delta A = | A_1 | -A_2$) obtenue à partir des vitesses des roues.

3. Procédé de régulation antiblocage selon la revendication 1, caractérisé en ce que la différence ∆A des deux décélérations du véhicule se forme de manière analogue et cette valeur de la différence est prise en compte pour former le critère d'instabilité.

4. Procédé de régulation antiblocage selon l'une des revendications 1 à 3, caractérisé en ce qu'en cas de détection d'un trajet dans de mauvaises conditions, on accentue l'influence de ∆A sur l'insensibilité de la régulation.

5. Procédé de régulation du glissement à l'entraînement selon lequel des capteurs de mesure fournissent les vitesses des roues, un circuit d'exploitation traite les signaux de vitesse de roue et les unités de commande commandent la pression de frein ou diminuent le couple moteur en cas de tendance au patinage, et le circuit d'exploitation détermine l'accélération du véhicule $A_4$ à partir des vitesses des roues et le signal $A_3$ d'un capteur d'accélération du véhicule est comparé au signal $A_4$ obtenu, procédé caractérisé en ce que si l'accélération du véhicule $A_3$, mesurée domine, le système ASR est modifié dans le sens d'une régulation moins sensible.

6. Procédé de régulation du glissement à l'entraînement selon la revendication 5, caractérisé en ce que le système ASR est commuté sur un mode moins sensible lorsque l'accélération mesurée du véhicule $A_3$ dépasse l'accélération $A_4$ ($\Delta A = A_3 - A_4$) déterminée à partir des vitesses des roues d'au moins une valeur prédéterminée ∆A.

7. Procédé de régulation du glissement à l'entraînement selon la revendication 5, caractérisé en ce que la différence ∆A des deux accélérations du véhicule est formée de manière analogique et en ce qu'on tient compte de cette valeur de différence ∆A pour former le seuil de patinage prédéterminé.

8. Procédé de régulation du glissement à l'entraînement selon l'une des revendications 5 à 7, caractérisé en ce que lorsqu'on reconnaît un chemin en mauvais état de circulation, on accentue l'influence de ∆A sur la sensibilité de la régulation.